# EUROPEAN PATENT SPECIFICATION

(11) **EP 3 366 605 B1**
(45) Date of publication and mention of the grant of the patent: **10.11.2021**
(21) Application number: 18158008.5
(22) Date of filing: 22.02.2018
(51) Int. Cl.: B65D 33/12, B31B 70/86, A43C 9/04, D07B 9/00, D07B 5/02, B31D 1/06

(54) **PROCESS FOR MAKING A ROPE-SHAPED OR RIBBON-SHAPED PORTION OF BAGS OR BOXES**
VERFAHREN ZUR HERSTELLUNG EINES KABELFÖRMIGEN ODER BANDFÖRMIGEN TEILS VON TASCHEN ODER KÄSTEN
PROCEDE DE FABRICATION D'UNE PARTIE DE TYPE CORDON OU RUBAN DE SACS OU DE BOITES

(30) Priority: 23.02.2017 IT 201700020662
(43) Date of publication of application: 29.08.2018
(73) Proprietor: Gropallo, Francesco Costantino Ambrogio, 20129 Milano (IT)
(72) Inventor: Gropallo, Francesco Costantino Ambrogio, 20129 Milano (IT)
(74) Representative: Fabiano, Piero

(56) References cited:
- EP-A1- 0 094 330
- DE-C- 466 642
- GB-A- 191 120 627
- US-A- 1 073 496
- US-A- 1 486 487
- US-A- 2 113 674
- US-A- 4 691 369
- US-A1- 2004 197 032

## Description

### Field of the Invention

The present invention relates to the field of packaging of bags and/or boxes and, in particular, to the field of packaging of bags and/or boxes provided with rope-shaped and/or ribbon-shaped portions, such as handles, made of cotton and/or natural fibers. More particularly, the present invention refers to a process for making rope-shaped or ribbon-shaped portions, such as handles, of bags or boxes, made of paper, fabric and/or polymers, preferably for luxury products and luxury packaging.

### Known Art

The present invention relates to the production of packaging such as bags and/or boxes provided with portions and/or accessories such as handles, cordage or closing ribbons, ornaments made of natural fibers, which are intended for customized and standard packages, in particular in the form of bags and boxes made of paper, leather, fabric and/or polymers used in any industrial field, in particular in the field of luxury fashion and jewelry products where the models are provided with knots or retainers visible from the outside and fastened by knots.

The packaging of a luxury product has always given the final consumer a well-defined and well-kept image and is therefore also used as a marketing and artistic instrument. Generally, bags or boxes for luxury products are made of paper, cardboard, leather, fabric and/or polymers and may have some portions, such as handles and/or closing or ornamental elements made of threadlike elements of cotton and/or natural fibers.

The portions and/or accessories making up the packaging of these products must have high aesthetic standards, being themselves image of the company which uses them and being, therefore, a project and real investment of marketing and/or image.

Moreover, since the most influential "brands" in fashion are increasingly sensitive to the use of environmentally friendly and eco-sustainable materials in making the packaging of their products, very often the suppliers of such packaging are required to comply with "eco-sustainable" specifications.

Currently, for paper products, these specifications provide that there are no polyesters and petroleum derivatives in the composition (except for paints and inks for coloring).

Therefore, to comply with these specifications, handles, ribbons or other packaging accessories may be used only if made of natural fibers and not of polyester and the like. For this reason, on the market there is packaging in the form of paper cases, fabric bags and the like, as well as bags and boxes and the like of polymers and similar materials, having handles, ropes, cordage and ribbons made of cotton, preferably completely made of cotton.

However, such cotton handles, ropes, cordage and ribbons, once cut to size, suffer from the problem that the ends fray and as a result they look neglected and unaesthetic. Furthermore, fraying makes it difficult to insert the rope into the holes obtained in the bag, in order to form the handle, or in the box if a ribbon and a cord are provided to facilitate the locking thereof or improve appearance.

US 4 691 369 A, US 2004/197032 A1 and US 1 073 496 A disclose processes of the prior art. Neither the techniques existing at the state of the art nor the heat-sealing technique can prevent fraying, the latter technique being normally used for polyester or plastic-based ropes.

The Applicant found that, in order to prevent fraying of cotton handles, cordage and ribbons, the solution currently adopted consists in sewing the ends, but also in this case the fraying is present, albeit in a reduced manner. Moreover, this system is excessively expensive and its aesthetic standard is not suited to the packaging of luxury products. The Applicant also observed that another known solution to prevent fraying is to use ending elements of metal or plastic or cellulose acetate and derivatives thereof, to be fitted on the free ends of the handles, cordage or ribbons, however such ending elements do not allow packaging to be completely environmentally friendly or in compliance with the eco-sustainable specifications of the end customer and further processing steps and increases in production costs are required. Nor are they compatible with an aesthetic image of the final product.

Thus, the Applicant faced the problem of providing a process for making a rope-shaped and/or ribbon-shaped portion, such as a handle, of bags and/or boxes made of cotton and/or natural fibers, the process being able to overcome the drawbacks of the known art, providing a rope-shaped and/or ribbon-shaped portion, such as a handle, of cotton and/or natural fibers, of bags and/or boxes and able to reduce the risk of fraying of the ends. The Applicant also faced the problem of obtaining a process for producing a bag and/or box provided with ribbon-shaped and/or rope-shaped portions, such as handles, which reduces the risk of fraying at the ends.

Finally, the Applicant faced the problem of providing handles for bags and/or boxes and a bag and/or box provided with such handles without the fraying problem. The Applicant further faced the problem of providing such packaging so that it can be obtained, besides, through a simple, fast and economical process.

### Summary of the invention

Therefore, a first aspect of the invention relates to a process for making a rope-shaped or ribbon-shaped portion of bags or boxes according to claim 1.

In the case of a ribbon-shaped element having yarns arranged on a single plane, "perimeter yarns" means all the yarns of the ribbon-shaped element itself.

Said procedure can be carried out manually and/or mechanically as will be illustrated in detail below.

The Applicant found that with the present method it is possible to prevent sheared end edges of packaging elements in natural fibers (cotton and the like) from fraying, without using complicated and expensive known processes such as stitching or crimping and/or alternative processes already known in the state of the art, such as application of ferrules or heat-sealing in case of polyester.

In fact, it should be noted that the processes of stitching the flaps of a sheared edge are expensive and not always able to give good aesthetic feature, and the heat-sealing methods can not be implemented in case of natural fibers that can not be heat-sealed, neither through mechanical processes nor through manual ones.

In the above said aspect, the present invention can have at least one of the preferred features described hereinafter.

Preferably, the process further comprises a step of drying the applied glue or resin or starch so that, in a radial section at the application point, at least 50% of the area of the rope-shaped or ribbon-shaped element is affected by the glue and is made cohesive.

Conveniently, the process further comprises a step of drying the applied glue or resin or starch so that, in a radial section placed at an axial distance of at least 0.5 cm from the point of application, at least 50% of the area of the rope-shaped or ribbon-shaped element is affected by the glue or resin or starch and is made cohesive.

Advantageously, the containment element is wrapped around said one rope-shaped or ribbon-shaped element and, once wrapped around the rope-shaped or ribbon-shaped element, has an axial extent between 0.5 and 10 cm.

Preferably, the step of applying the glue or resin or starch is carried out by injection, by inserting an injector into the rope-shaped or ribbon-shaped element, preferably passing through the containment element.

As an alternative, the step of applying the glue or resin or starch is carried out by infiltration.

Conveniently, if the step of applying of the glue or resin or starch takes place after said cutting, said applying a glue or resin or starch takes place on a surface of an end of said rope-shaped or ribbon-shaped element (9) created by said cutting and not covered by said containment element (12) so that the glue or resin or starch seeps into said rope-shaped or ribbon-shaped element.

Advantageously, said rope-shaped or ribbon-shaped element comprises an outer envelope or sheath and a core.

Preferably, said rope-shaped and/or ribbon-shaped is made of cotton.

Preferably said rope-shaped and/or ribbon-shaped element is made of cotton by means of known braiding techniques and by forming a cordage core and ribbon weaving techniques of the weft/warp-type.

Conveniently, while combining said containment element with said predetermined portion of the rope-shaped or ribbon-shaped element, said containment element is wrapped around said rope-shaped or ribbon-shaped element.

According to another aspect, the present invention concerns a process according to claim 12.

Further characteristics and advantages of the invention will become more evident from the detailed description of some preferred, but not exclusive, embodiments of a process for making a rope-shaped or ribbon-shaped portion of bags or boxes according to the present invention.

### Brief description of the drawings

This description will be explained hereinafter by referring to the attached drawings provided for illustration purposes only and without limitation, in which:
- figure 1 shows a schematic view of an end of a rope-shaped cotton element for making a handle of a bag or shopper according to the known art, the edges of the knotted end being frayed;
- figure 2 shows a schematic view of an end of a rope-shaped cotton element for making a handle of a bag or shopper according to the known art, the edges of the knotted end being stitched but tending to become frayed;
- figure 3 shows a schematic view of an end of a rope-shaped element for making a handle of a bag or shopper according to the present invention, where the extremity is knotted and sharpened;
- figure 4 shows the extremity of fig. 3 before the anti-fraying treatment according to
the present invention;
- figure 5 shows the handle extremity of fig. 4 after the anti-fraying treatment according to the present invention;
- figure 6 is a schematic view of a bag or shopper whose handles are made through a process according to the present invention;
- figure 7 is a first step of a process according to the present invention in which at least one containment element is combined with a predetermined portion of the rope-shaped or ribbon-shaped element;
- figure 8 is a second step of a process according to the present invention in which a glue or resin is applied to the rope-shaped element of figure 7;
- figure 9 is a third step of a process according to the present invention in which the rope-shaped element of figure 7 is cut;
- figure 10 is a fourth step of a process according to the present invention in which the containment element is removed from the end of the cut rope-shaped element of figure 9;
- figure 11 is a second step of an alternative embodiment of the process according to the present invention in which the rope-shaped element of figure 7 is cut;
- figure 12 is a third step of an alternative embodiment of the process according to the present invention in which glue is applied to a cut end of the rope-shaped element of figure 11; and
- figure 13 is a fourth step of an alternative embodiment of the process according to the present invention in which the containment element is removed from the end of the cut rope-shaped element of figure 11.

### Detailed description of embodiments of the invention

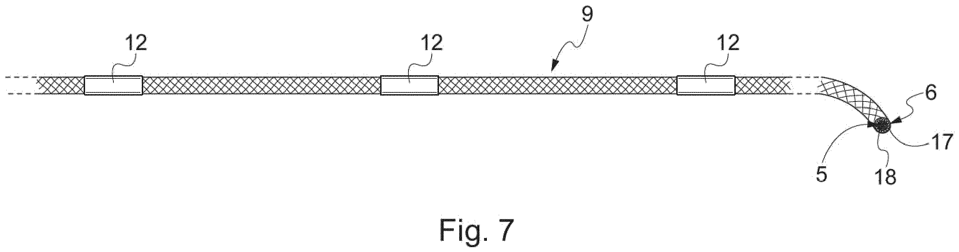

Referring to figures 7-13, a rope-shaped and/or ribbon-shaped portion of bags or boxes is depicted by the numerical reference 19.

In the preferred embodiment shown in the figures, the rope-shaped and/or ribbon-shaped portion 19 is a handle 10 made of cotton and/or natural fibers, for bags 8 typically named shoppers, preferably for luxury products.

This handle 10 is shown herein in the form of a cylindrical rope, although this is not binding for the purposes of the present invention.

As an alternative the handle 10 can be, de facto, in the form of a preferably flat ribbon, without thereby departing from the teaching of the present invention.

The handle 10 consists of a rope-shaped element 9 cut to size and having, at its ends, an edge 3 non-frayed but rather compact and cohesive.

In particular, the flaps formed by the edge 3 are held together through the application of an environmentally friendly glue/adhesive, in particular water-based, such as for example casein glue, starch-based vegetable glue, vinyl glue, cellulose-based glue, preferably a vinyl glue, or through the application of an environmentally friendly and/or natural resin having elastic consistency such as rubber, gutta-percha and the like, or biodegradable resins such as Mater Bi, wet-end starches generally used in the paper industry, corn starches.

All these elements can also be mixed with paints or colors of the same nature, used to color the same accessories.

In a preferred embodiment said glue is a vinyl glue.

The amount of glue or resin applied varies according to the diameter of the rope-shaped element 9 and can range from 0.5 ml to 2 ml for rope-shaped elements 9 whose diameter is preferably between 2 and 8 mm.

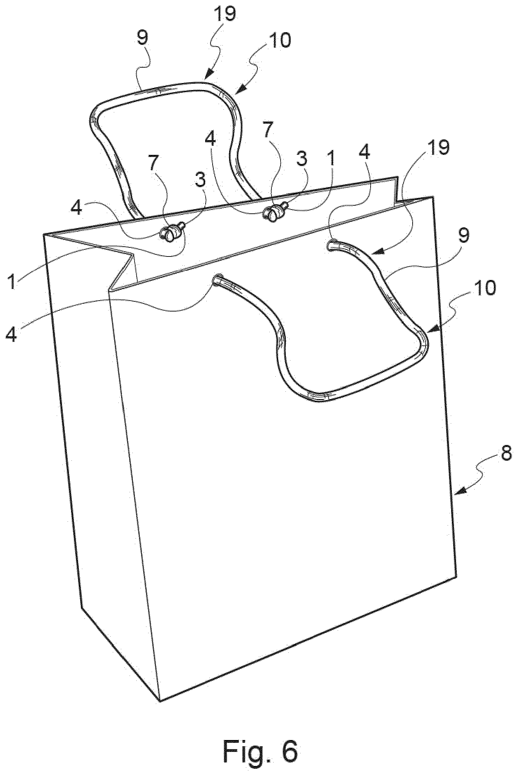

In the embodiment shown in figure 6 a substantially parallelepiped-shaped bag 8 is shown, on each of the two facing sides of the bag there are pairs of eyelets or holes 4 shaped for the insertion of a handle 10 made from a cylindrical rope-shaped element 9 cut to size.

The two holes or eyelets 4 of each pair are arranged substantially at the same height with respect to the bottom wall of the bag 8 and placed at a predetermined distance.

The rope-shaped element 9, constituting the handle 10, has length greater than the predetermined distance between the two holes or eyelets 4.

Once the rope-shaped element 9, constituting the handle 10, is cut to size, it may have a length measured along its extent between 8 and 90 cm, preferably between 8 and 50 cm, even more preferably between 10 cm and 30 cm.

Once the bag is assembled, the rope-shaped element 9 now inserted into the two holes or eyelets 4 has at each end a knot 7 to form a retainer 2 so as to prevent the handles 10 from being released from the holes or eyelets 4 of the bag 8.

In the preferred embodiment, the rope-shaped element 9 is formed by an outer envelope or sheath 6 and a core 5.

The outer envelope or sheath 6 is a tubular-shaped structure made of a plurality of woven yarns 17 with a weave of the weft/warp type. It is industrially produced by a spindle braiding machine. The yarn count 17 commonly has classification between 49.16 and 2950 Dtex or between 2 and 120 Ne.

The core 5 can be constituted by paper, cellulose or by yarn whose yarn count is less than that of the yarns constituting the outer envelope or sheath 6. By way of example, the yarn count of the yarns forming the core can be 983.3 Dtex or 6 Ne for single, twisted and two or more ply yarns. The yarns 18 of the core 6 are generally called strands. The strands are defined as a set of twisted or woven yarns.

In the preferred embodiment, the yarns 17 constituting the outer envelope or sheath 6 are made of cotton or natural fibers.

As an alternative, the cotton can be BCI cotton (Better Cotton Initiative), natural or organic cotton (i.e. cottons deriving from controlled organic crops not treated with pesticides, herbicides or chemical substances to enhance their growth), "contamination free" cotton, carded cotton or regenerated cotton.

Natural fibers suitable for the purpose are fibers from leaves, fibers from cellulose, fibers from seeds, animal fibers or combinations thereof.

Fibers from leaves can be sisal.

Fibers from cellulose can be paperyarn.

Fibers from seeds can be selected from hemp fiber, broom, flax, nettle, jute, ramie, coir, manila hemp or combinations thereof.

The fibers from animals can be selected from silk fibers, angora, marine silk, cashmere or combinations thereof.

Preferably, the yarns 17 constituting the outer envelope or sheath 6 are made of cotton, preferably completely made of cotton with negligible impurities in the order of 5% by weight.

Preferably, the yarns 18 of the core 5 are made of cotton, preferably completely made of cotton with negligible impurities in the order of 5% by weight.

The process for making a handle 10 according to the present invention will now be described referring to figures 7-10.

First of all, according to said process a rope-shaped and/or ribbon-shaped element 9 is provided, preferably composed of an outer envelope or sheath 6 made of cotton and a core 5 composed of cotton strands.

A containment element 12 is combined with the rope-shaped element 9 at a predetermined position.

Figure 7 shows a rope-shaped element 9 with three containment elements 12.

The containment element 12 is wrapped around the rope-shaped element 9 at the position in which, in a subsequent step of the process, the rope-shaped element 11 and the containment element 12 will be cut.

According to an alternative embodiment, the containment element 12 can be simultaneously wrapped around several rope-shaped or ribbon-shaped elements 9. Preferably, once the containment element is wrapped around the rope-shaped element, the former has an axial extent, that is to say in the extending direction of the rope-shaped element 11, between 0.5 and 10 cm.

In the preferred embodiment, the containment element 12 is a ribbon made of plastic material or cellulose-based material which adheres circumferentially to the outer surface of the rope-shaped element 9 so as to make the strands of the rope-shaped element 9 compact, in particular both the yarns 17 of the sheath 6 and the yarns 18 of the core 5. The containment element 12 can be a plastic or cellulose-based ribbon either provided with an adhesive or, as an alternative, optionally treated with a glue or resin or starch before application in order to allow it to adhere to the rope-shaped element 9. Alternatively, the glue or resin or starch could be placed in the position of the rope-shaped element 9 predefined to receive the containment element 12.

According to another embodiment, the containment element 12 could be a rolled element of metal. In the latter case, the containment element 12 is wrapped around at least one rope-shaped element by mechanical seaming.

Subsequently, at the portion where the containment element 12 is combined with the rope-shaped element 11, a glue or resin or starch is applied to the latter.

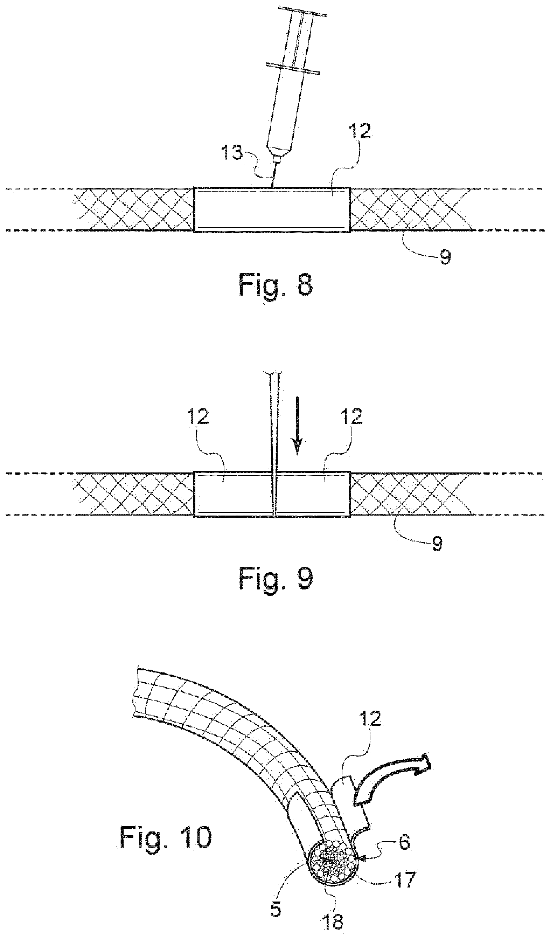

In particular, this step of applying the glue or resin or starch is carried out by injection, by inserting the injector 13 inside the rope-shaped element 9 and passing through the containment element 12, as shown in figure 8.

In other words the injector 13, depicted in figure 8 by way of example only as a syringe, pierces the containment element 12 and injects the glue or resin or starch into the rope-shaped element 9, preferably at the core 5 thereof.

The glue or resin or starch spreads by capillarity so that, at the application point, it will affect at least 50% of the area of the rope-shaped element 9, according to a measure taken at a radial section of the rope-shaped element itself.

Preferably, the glue or resin spreads by capillarity so that, at the application point, it will affect at least 80% of the area of the rope-shaped element 9, according to a measure taken at a radial section of the rope-shaped element itself.

Still more preferably, the glue or resin spreads by capillarity so that, at the application point, it will affect the whole area of the rope-shaped element, according to a measure taken at a radial section of the rope-shaped element itself.

At this point the glue or resin or starch is allowed to dry out, preferably at room pressure and temperature.

Then the rope-shaped and/or ribbon-shaped element 9 can be cut to size by manual or mechanical shearing, preferably by cold cutting, as schematically shown in Figure 9.

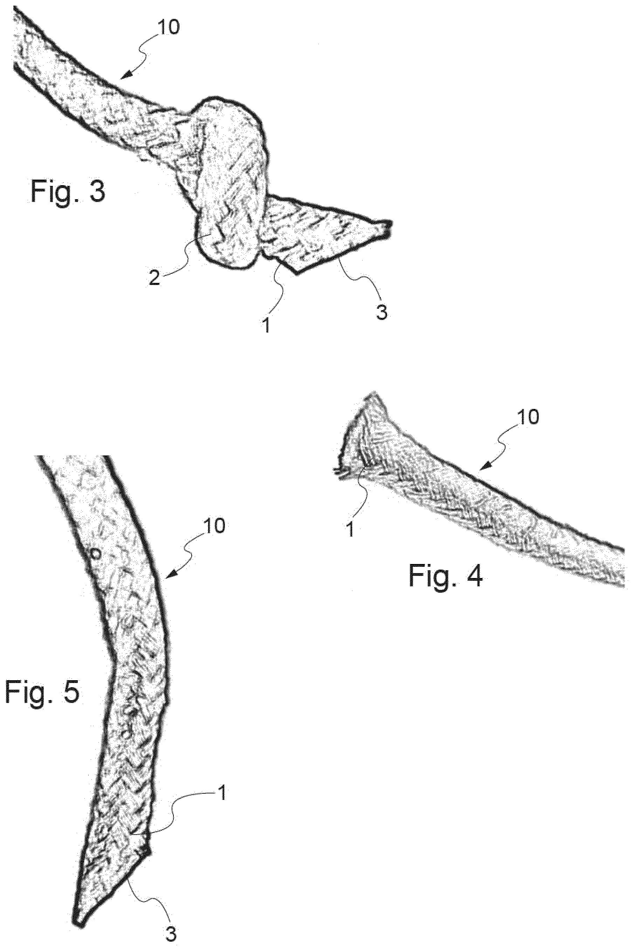

The rope-shaped element 9 is then cut at the containment element 12 which is cut together with the rope-shaped element 9, so as to have at least one portion of containment element 12 at each of the ends 3 of the rope-shaped element 9 which have been created by the cut. At this point, in the process there may be a manual or automatic or semiautomatic shaping step to shape the edge 3 of the end of the cut rope-shaped or ribbon-shaped element, to flatten the ending part by applying pressure, for example by later manual manipulation, to the extent of obtaining a thinned edge 3 otherwise defined "sharpened", with the flaps joined together as shown in Figure 5, so as to obtain a sharp or uniform edge. The edge 3 may not necessarily be flattened. In this way all the residues of the materials sticking out of the cut ends of the handle 10 are removed and/or merged into the main body of the cut rope-shaped element.

The cut-to-size rope-shaped element 9 is now left at rest, so that the glue or resin or starch applied at the ends can dry out.

At this point, as shown in figure 10, the containment element 12 is removed from the rope-shaped element 9.

The function of the containment element 12 was to compact the yarns 17, 18 constituting the end of the cut rope-shaped element 9 until the applied glue or resin dries out and carries out its function of making the yarns 17, 18 compact or cohesive.

The cut-to-size rope-shaped element 9 is then inserted into the holes or eyelets 4 of a bag 8. In particular, the edge 3 of each end 1 of the rope-shaped element 9, uniformly adapted, is inserted inside the hole or eyelet of the bag 8, then knotting the end to form a knot 7 so as to prevent the handles 10 from being released from the holes or eyelets 4 of the package.

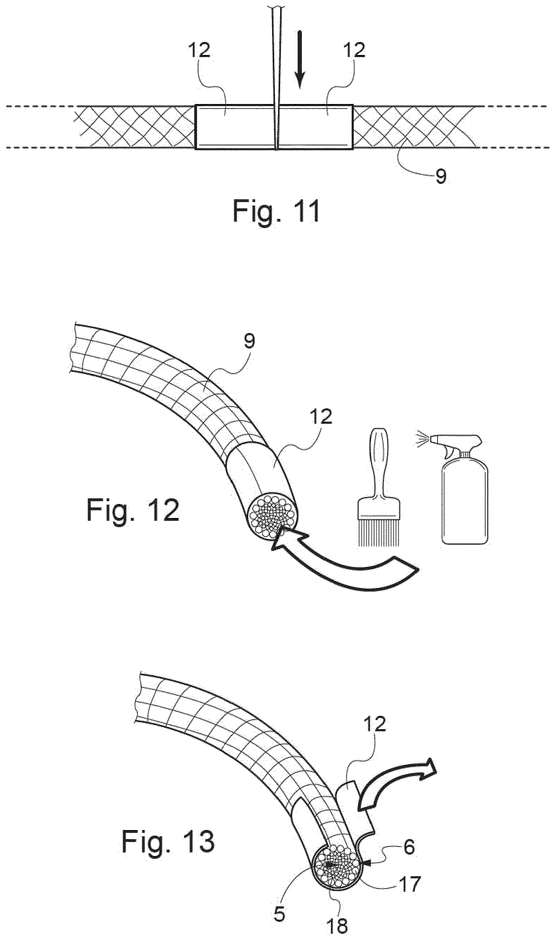

Figures 11 - 13 show an alternative embodiment of the process according to the present invention.

According to this alternative embodiment, the first steps of the process are identical to those described with reference to figures 7- 10, but in this case the rope-shaped or ribbon-shaped element 9 is cut to size, figure 11, before the glue application step.

In other words, after the rope-shaped element 9 and/or ribbon-shaped element has been provided and at least one containment element 12 has been applied thereto, the rope-shaped element 9 is directly cut to size at the containment element 12, also in this case making sure that each of the ends created by said cut have at least one portion of containment element 12.

At this point, a glue or resin or starch is applied to the cut end.

In particular, this application step takes place at the end of the rope-shaped element 9 and in particular on the head surface not covered by the containment element 12.

Preferably, this step of applying the glue or resin or starch is carried out by brushing, spraying or soaking.

The cut-to-size rope-shaped element 9 is now left at rest, so that the glue or resin or starch applied at the ends 1 is dried out.

At this point the containment element 12, which was used to compact the yarns 17, 18 constituting the end 1 of the cut rope-shaped element 9 until the applied glue or resin dried out thus performing its compacting function, is removed from the rope-shaped or ribbon-shaped element 9.

The cut-to-size rope-shaped element 9 is then inserted into the holes or eyelets 4 of a bag 8. In particular, the edge 3 of each end of the rope-shaped element 9, uniformly adapted, is inserted inside the hole or eyelet 4 of the bag 8, then knotting the end to form a knot 7 so as to prevent the handles 10 from being released from the holes or eyelets 4 of the package.

Also in this case, before letting the glue, resin or starch dries out, pressure can be applied on the end of the rope-shaped element 9 so as to shape its edges and allow any excess glue or resin to come out.

Alternatively, the process according to the present invention may not have the step of combining and, as a result, removing the containment element 12.

In this case, a rope-shaped and/or ribbon-shaped element 9, comprising at least one yarn 17, 18, is provided.

The rope-shaped and/or ribbon-shaped element 9 is made of cotton or natural fibers. What above applies to the rope-shaped or ribbon-shaped element 9.

The rope-shaped or ribbon-shaped element 9 is then cut to size and the cut end is dipped into glue or resin or starch.

When removed from glue, resin or starch, the cut end 1 may be pressed in order to be shaped and to remove excess glue, resin or starch, thus making at least the perimeter yarns of the rope-shaped or ribbon-shaped element 9 cohesive and compact.

Preferably, pressure is applied on said end in order to shape said end of said rope-shaped and/or ribbon-shaped element so that the yarns of said end of said rope-shaped and/or ribbon-shaped element adhere to each other so that said ends are thinned and not frayed.

Glue or resin or starch may also not be removed and simply be absorbed by the end of the rope-shaped or ribbon-shaped element 9.

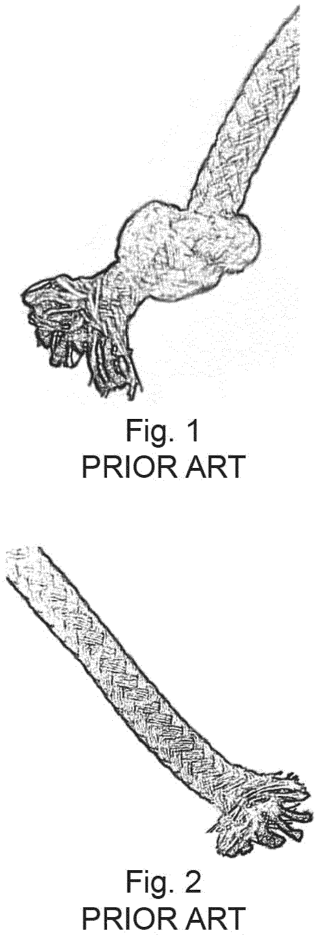

What described above is valid for the glue or resin or starch and the following steps of fabricating the bag. It is therefore clear that the processes described according to this invention can produce improved natural fiber or cotton handles 10, where the unsightly fraying effect of the cut ends of the known handles that have been illustrated in Figures 1-2 is absent or considerably improved.

The handles obtained have clean, neat appearance and look substantially similar to the known polyester handles provided with heat-sealed ends.

As mentioned, the ropes of 100% cotton of the known art illustrated in fig. 1 generally have ends simply cut and knotted, but suffer from the drawback that they can not be heat-sealed, so that they are subject to fraying.

As evident, such fraying is very unsightly and is not acceptable for many brands that have special image offices with sometimes manic quality controls.

The need for very high aesthetic quality is not satisfied by this embodiment of the known art.

Therefore, the present process meets environmental, qualitative and economic requirements.

In particular, it meets the eco-sustainable and qualitative requirements since the same qualitative result obtained with mixed materials such as cotton/polyester, which are currently heat-sealed or heat treated to avoid fraying, can be achieved by using cotton and natural fiber accessories.

It also meets economic requirements because, according to the current state of the art, the alternative method of preventing the fraying of the cut edges of cotton elements is sewing, which is a longer and more expensive method.

In fact, no type of heat-sealing technique can be applied in order to have sharp ends since cotton or natural fibers can not be sealed by thermal operations.

In practice, the present invention can be applied also to:
- packaging, as regards of bags and boxes made of fabric and natural fibers and the like;
- packaging, as regards of bags and boxes made of polymers and the like and whose accessories are made of cotton and the like and/or natural fibers;
- packaging, as regards of bags and boxes made of leather and the like and whose accessories are made of cotton and the like and/or natural fibers.

## Claims

1. Process for making a rope-shaped or ribbon-shaped portion of bags or boxes, comprising:
- providing a rope-shaped or ribbon-shaped element (9) having a perimeter, said rope-shaped or ribbon-shaped element (9) comprising yarns (17,18); said rope-shaped or ribbon-shaped element (9) being made of cotton or natural fibers;
- combining at least one containment element (12) with a predetermined portion of said rope-shaped or ribbon-shaped element (9), thereby forming a combination of said at least one containment element (12) and said rope-shaped or ribbon-shaped element (9);
- cutting said combination of at least one containment element (12) and said rope-shaped or ribbon-shaped element (9), so that said cutting creates ends (1) of said rope-shaped or ribbon-shaped element (9), each of the ends (1) having at least one portion of containment element (12);
- applying a glue or resin or starch to said rope-shaped or ribbon-shaped element (9) at the predetermined portion of said rope-shaped or ribbon-shaped element (12); said applying a glue or resin or starch occurring before or after said cutting;
- removing said containment element (12) from said rope-shaped or ribbon-shaped element (9) after at least the yarns at the perimeter of said rope-shaped or ribbon-shaped element (9) have been made cohesive by the applied glue or resin or starch.

2. Process for making a rope-shaped or ribbon-shaped portion of bags or boxes according to claim 1, **characterized by** comprising a step of drying the applied glue or resin or starch so that, in a radial section at the application point, at least 50% of the area of the rope-shaped or ribbon-shaped element (9) is affected by the glue, resin or starch and is made cohesive.

3. Process for making a rope-shaped or ribbon-shaped portion of bags or boxes according to claim 1, **characterized in that** said rope-shaped or ribbon-shaped element (9) comprises an outer envelope or sheath (6) and a core (5).

4. Process for making a rope-shaped or ribbon-shaped portion of bags or boxes according to claim 1, **characterized in that** said containment element (12) is wrapped around said rope-shaped or ribbon-shaped element (9) and, once wrapped around the rope-shaped or ribbon-shaped element (9), has an axial extent between 0.5 and 10 cm.

5. Process for making a rope-shaped or ribbon-shaped portion of bags or boxes according to claim 1, **characterized in that** applying the glue or resin or starch takes place by injection, by inserting an injector into the rope-shaped or ribbon-shaped element (9).

6. Process for making a rope-shaped or ribbon-shaped portion of bags or boxes according to claim 1, **characterized in that** if applying the glue or resin or starch takes place after said cutting, said applying of glue or resin or starch takes place on a surface of an end of said rope-shaped or ribbon-shaped element (9) created by said cutting and not covered by said containment element (12) so that the glue or resin or starch seeps into said rope-shaped or ribbon-shaped element (9).

7. Process for making a rope-shaped or ribbon-shaped portion of bags or boxes according to claim 3, **characterized in that** said glue or resin affects at least said outer envelope or sheath (6) so as to make the outer envelope or sheath (6) and said core (5) compact.

8. Process for making a rope-shaped or ribbon-shaped portion (9) of bags or boxes according to claim 1, **characterized in that** said rope-shaped or ribbon-shaped element (9) is made of cotton.

9. Process for making a rope-shaped or ribbon-shaped portion (9) of bags or boxes according to claim 1, wherein while combining said containment element (12) with said predetermined portion of the rope-shaped or ribbon-shaped element (9), said containment element (12) is wrapped around said rope-shaped or ribbon-shaped element (9).

10. Process for making a rope-shaped or ribbon-shaped portion (9) of bags or boxes according to claim 1, wherein while combining said at least one containment element (12) with said predetermined portion of the rope-shaped or ribbon-shaped element (9), said containment element (12) is coupled to said rope-shaped or ribbon-shaped element by seaming.

11. Process for making a rope-shaped or ribbon-shaped portion (9) of bags or boxes according to claim 1, **characterized in that** said glue is a water-based glue

12. Process according to any one of preceding claims 1 to 10 for making a bag with a handle, comprising the steps of:
- providing a parallelepiped container provided with at least one pair of holes or eyelets (4) on each of two facing sides;
- inserting at least one cut end of said rope-shaped or ribbon-shaped element (9) created by said cutting into a hole or eyelet (4);
- fastening by a knot (7) the end (1) of said ribbon-shaped or rope-shaped element (9) inserted in said hole or eyelet (4).

## Patentansprüche

1. Verfahren zur Herstellung eines seilförmigen oder bandförmigen Abschnitts von Beuteln oder Schachteln, aufweisend:
- Bereitstellen eines seilförmigen oder bandförmigen Elements (9) mit einem Umfang, wobei das seilförmige oder bandförmige Element (9) Garne (17, 18) aufweist; wobei das seilförmige oder bandförmige Element (9) aus Baumwolle oder Naturfasern hergestellt ist;
- Kombinieren von mindestens einem Aufnahmeelement (12) mit einem vorbestimmten Abschnitt des mindestens einen seilförmigen oder bandförmigen Elements (9), wodurch eine Kombination des mindestens einen Aufnahmeelements (12) und dem seilförmigen oder bandförmigen Element (9) gebildet wird;
- Schneiden der Kombination des mindestens einen Aufnahmeelements (12) und des seilförmigen oder bandförmigen Elements (9), so dass durch den Schnitt Enden (1) des mindestens einen seilförmigen oder bandförmigen Elements (9) erzeugt werden, wobei jedes der Enden (1) mindestens einen Abschnitt des Aufnahmeelements (12) aufweist;
- Auftragen eines Klebers oder eines Harzes oder einer Stärke auf das seilförmige oder bandförmige Element (9) an dem vordefinierten Abschnitt des seilförmigen oder bandförmigen Elements (12), wobei das Auftragen des Klebers oder des Harzes oder der Stärke vor oder nach dem Schneiden erfolgt;
- Entfernen des Aufnahmeelements (12) von dem seilförmigen oder bandförmigen Element (9), nachdem mindestens die Garne an dem Umfang des seilförmigen oder bandförmigen Elements (9) durch den aufgetragenen Kleber oder den aufgetragenen Harz oder die aufgetragene Stärke klebend gemacht worden ist.

2. Verfahren zur Herstellung eines seilförmigen oder bandförmigen Abschnitts von Beuteln oder Schachteln nach Anspruch 1, **dadurch gekennzeichnet, dass** es einen Schritt des Trocknens des aufgetragenen Klebers oder des aufgetragenen Harzes oder der aufgetragenen Stärke aufweist, so dass in einem radialen Abschnitt am Auftragungspunkt mindestens 50% der Fläche des seilförmigen oder bandförmigen Elements (9) durch den Kleber, den Harz oder die Stärke beeinflusst und klebend gemacht wird.

3. Verfahren zur Herstellung eines seilförmigen oder bandförmigen Abschnitts von Beuteln oder Schachteln nach Anspruch 1, **dadurch gekennzeichnet, dass** das seilförmige und/oder bandförmige Element (9) einen äußeren Umschlag oder Hülle (6) und einen Kern (5) aufweist.

4. Verfahren zur Herstellung eines seilförmigen oder bandförmigen Abschnitts von Beuteln oder Schachteln nach Anspruch 1, **dadurch gekennzeichnet, dass** das Aufnahmeelement (12) um das seilförmige oder bandförmige Element (9) gewickelt ist und, einmal um das seilförmige oder bandförmige Element (9) gewickelt, eine axiale Erstreckung zwischen 0,5 und 10 cm aufweist.

5. Verfahren zur Herstellung eines seilförmigen oder bandförmigen Abschnitts von Beuteln oder Schachteln nach Anspruch 1, **dadurch gekennzeichnet, dass** das Auftragen des Klebers oder des Harzes oder der Stärke durch Injektion erfolgt, indem ein Injektor in das seilförmige oder bandförmige Element (9) eingebracht wird.

6. Verfahren zur Herstellung eines seilförmigen oder bandförmigen Abschnitts von Beuteln oder Schachteln nach Anspruch 1, **dadurch gekennzeichnet, dass**, falls das Auftragen des Klebers oder des Harzes oder der Stärke nach dem Schneiden erfolgt, das Auftragen des Klebers oder des Harzes oder der Stärke auf einer Oberfläche eines Endes des seilförmigen oder bandförmigen Elements (9), erzeugt durch das Schneiden und nicht abgedeckt durch das Aufnahmeelement (12), stattfindet, so dass der Kleber oder der Harz oder die Stärke in das seilförmige oder bandförmige Element (9) sickert.

7. Verfahren zur Herstellung eines seilförmigen oder bandförmigen Abschnitts von Beuteln oder Schachteln nach Anspruch 3, **dadurch gekennzeichnet, dass** der Kleber oder das Harz mindestens auf den äußeren Umschlag oder Hülle (6) einwirkt, so dass der äußere Umschlag oder Hülle (6) und der Kern (5) kompaktiert werden.

8. Verfahren zur Herstellung eines seilförmigen oder bandförmigen Abschnitts (9) von Beuteln oder Schachteln nach Anspruch 1, **dadurch gekennzeichnet, dass** das seilförmige oder bandförmige Element (9) aus Baumwolle hergestellt ist.

9. Verfahren zur Herstellung eines seilförmigen oder bandförmigen Abschnitts (9) von Beuteln oder Schachteln nach Anspruch 1, wobei während des Kombinierens des Aufnahmeelements (12) mit dem vorbestimmten Abschnitt des seilförmigen oder bandförmiges Elements (9) das Aufnahmeelement (12) um das seilförmige oder bandförmige Element (9) gewickelt wird.

10. Verfahren zur Herstellung eines seilförmigen oder bandförmigen Abschnitts (9) von Beuteln oder Schachteln nach Anspruch 1, wobei während des Kombinierens des mindestens einen Aufnahmeelements (12) mit dem vorbestimmten Abschnitt des seilförmigen oder bandförmigen Elements (9) das Aufnahmeelement (12) mit dem seilförmigen oder bandförmigen Element durch Nahtbildung verbunden wird.

11. Verfahren zur Herstellung eines seilförmigen oder bandförmigen Abschnitts (9) von Beuteln oder Schachteln nach Anspruch 1, **dadurch gekennzeichnet, dass** der Kleber ein Kleber auf Wasserbasis ist.

12. Verfahren nach einem der vorhergehenden Ansprüche 1 bis 10 zur Herstellung einer Tasche mit einem Griff, aufweisend die Schritte:
- Bereitstellen eines quaderförmigen Behälters, der mit mindestens einem Paar von Löchern oder Ösen (4) auf jeder von zwei gegenüberliegenden Seiten versehen ist;
- Einführen mindestens eines abgeschnittenen Endes des seilförmigen oder bandförmigen Elements (9), erzeugt durch das Schneiden, in ein Loch oder eine Öse (4);
- Befestigen des Endes (1) des bandförmigen oder seilförmigen Elements (9), das in das Loch oder die Öse (4) eingefügt ist, durch einen Knoten (7).

## Revendications

1. Procédé de fabrication d'une partie en forme de cordon ou de ruban de sacs ou de boîtes, comprenant les étapes consistant à :
- fournir un élément en forme de cordon ou de ruban (9) ayant un périmètre, ledit élément en forme de cordon ou de ruban (9) comprenant des fils (17, 18) ;
ledit élément en forme de cordon ou de ruban (9) étant fait de coton ou de fibres naturelles;
- combiner au moins un élément de confinement (12) avec une partie prédéterminée dudit élément en forme de cordon ou de ruban (9), formant ainsi une combinaison dudit au moins un élément de confinement (12) et dudit élément en forme de cordon ou de ruban (9) ;
- couper ladite combinaison d'au moins un élément de confinement (12) et dudit élément en forme de cordon ou de ruban (9), de sorte que ladite coupe crée des extrémités (1) dudit élément en forme de cordon ou de ruban (9), chacune des extrémités (1) ayant au moins une partie d'élément de confinement (12) ;
- appliquer une colle ou une résine ou l'amidon sur ledit élément en forme de cordon ou de ruban (9) au niveau de la partie prédéterminée dudit élément en forme de cordon ou de ruban (12) ;
ladite étape d'application d'une colle ou une résine ou l'amidon se produisant avant ou après ladite coupe ;
- retirer ledit élément de confinement (12) dudit élément en forme de cordon ou de ruban (9) après qu'au moins les fils au périmètre dudit élément en forme de cordon ou de ruban (9) ont été rendus cohésifs par la colle ou la résine ou l'amidon appliqué(e).

2. Procédé de fabrication d'une partie en forme de cordon ou de ruban de sacs ou de boîtes selon la revendication 1, **caractérisé en ce qu'**il comprend une étape consistant à sécher la colle ou la résine ou l'amidon appliqué(e) de sorte que, dans une section radiale au niveau du point d'application, au moins 50 % de la surface de l'élément en forme de cordon ou de ruban (9) est affectée par la colle, la résine ou l'amidon et est rendue cohésive.

3. Procédé de fabrication d'une partie en forme de cordon ou de ruban de sacs ou de boîtes selon la revendication 1, **caractérisé en ce que** ledit élément en forme de cordon ou de ruban (9) comprend une enveloppe ou gaine externe (6) et un noyau (5).

4. Procédé de fabrication d'une partie en forme de cordon ou de ruban de sacs ou de boîtes selon la revendication 1, **caractérisé en ce que** ledit élément de confinement (12) est enroulé autour dudit élément en forme de cordon ou de ruban (9) et, une fois enroulé autour de l'élément en forme de cordon ou de ruban (9), a une étendue axiale comprise entre 0,5 et 10 cm.

5. Procédé de fabrication d'une partie en forme de cordon ou de ruban de sacs ou de boîtes selon la revendication 1, **caractérisé en ce que** l'application de la colle ou de la résine ou de l'amidon a lieu par injection, en insérant un injecteur dans l'élément en forme de cordon ou de ruban (9).

6. Procédé de fabrication d'une partie en forme de cordon ou de ruban de sacs ou de boîtes selon la revendication 1, **caractérisé en ce que** l'application de la colle ou de la résine ou de l'amidon a lieu après ladite coupe, ladite application de la colle ou de la résine ou de l'amidon a lieu sur une surface d'une extrémité dudit élément en forme de cordon ou de ruban (9) créée par ladite coupe et non recouverte par ledit élément de confinement (12) de sorte que la colle ou la résine ou l'amidon s'infiltre dans ledit élément en forme de cordon ou de ruban (9).

7. Procédé de fabrication d'une partie en forme de cordon ou de ruban de sacs ou de boîtes selon la revendication 3, **caractérisé en ce que** ladite colle ou résine affecte au moins ladite enveloppe ou gaine externe (6) de manière à rendre l'enveloppe ou gaine externe (6) et ledit noyau (5) compacts.

8. Procédé de fabrication d'une partie en forme de cordon ou de ruban (9) de sacs ou de boîtes selon la revendication 1, **caractérisé en ce que** ledit élément en forme de cordon ou de ruban (9) est réalisé en coton.

9. Procédé de fabrication d'une partie en forme de cordon ou de ruban (9) de sacs ou de boîtes selon la revendication 1, dans lequel, pendant que ledit élément de confinement (12) est combiné avec ladite partie prédéterminée de l'élément en forme de cordon ou de ruban (9), ledit élément de confinement (12) est enroulé autour dudit élément en forme de cordon ou de ruban (9).

10. Procédé de fabrication d'une partie en forme de cordon ou de ruban (9) de sacs ou de boîtes selon la revendication 1, dans lequel, pendant que ledit au moins un élément de confinement (12) est combiné avec ladite partie prédéterminée de l'élément en forme de cordon ou de ruban (9), ledit élément de confinement (12) est couplé audit élément en forme de cordon ou de ruban par couture.

11. Procédé de fabrication d'une partie en forme de cordon ou de ruban (9) de sacs ou de boîtes selon la revendication 1, **caractérisé en ce que** ladite colle est une colle à base d'eau.

12. Procédé selon l'une quelconque des revendications précédentes 1 à 10 pour réaliser un sac avec une poignée, comprenant les étapes consistant à :
- fournir un récipient parallélépipédique muni d'au moins une paire de trous ou d'œillets (4) sur chacun de deux côtés opposés ;
- insérer au moins une extrémité coupée dudit élément en forme de cordon ou de ruban (9) créé par ladite coupe dans un trou ou un œillet (4) ;
- fixer par un nœud (7) l'extrémité (1) dudit élément en forme de ruban ou de cordon (9) inséré dans ledit trou ou œillet (4).
